Europäisches Patentamt

European Patent Office

Office européen des brevets

(11) Veröffentlichungsnummer: **0 466 158 A1**

## (12) EUROPÄISCHE PATENTANMELDUNG

(21) Anmeldenummer: **91111568.1**

(22) Anmeldetag: **11.07.91**

(51) Int. Cl.5: **E06B 3/96**, F16C 11/10

(30) Priorität: **13.07.90 AT 1497/90**

(43) Veröffentlichungstag der Anmeldung:
**15.01.92 Patentblatt 92/03**

(84) Benannte Vertragsstaaten:
**AT BE CH DE ES FR GB IT LI NL**

(71) Anmelder: **Austria Metall Aktiengesellschaft**

**A-5282 Braunau am Inn(AT)**

(72) Erfinder: **Knauseder, Kurt**
**Kugelberg 15**
**A-5222 Pfaffstätt(AT)**

(74) Vertreter: **WILHELMS, KILIAN & PARTNER**
**Patentanwälte**
**Eduard-Schmid-Strasse 2**
**W-8000 München 90(DE)**

(54) **Eckwinkel zum Einsetzen in Profile für Rahmen von Fenstern, Türen, Fassadenteilen u.dgl.**

(57) Eckwinkel der zwei gegeneinander einstellbare und fixierbare Schenkel (1, 2) beinhaltet, die jeweils in die Profile eingreifen und an diesen fixiert sind, wobei die miteinander kooperierenden Teil der Schenkel zylindrisch sind und gegenseitig ineinandergreifende Verzahnungen (9, 10) aufweisen, an den normal zum jeweiligen Wälzkreis einer Verzahnung stehenden Seitenflächen eines Schenkels in deren Schnittpunkt mit der jeweiligen Wälzkreisachse der Verzahnung eine Lasche (3, 3') an den zueinander benachbarten Seitenflächen der beiden Schenkel (1, 2) befestigt ist, die Lasche (3, 3') und der Schenkel (1, 2) eine gemeinsame Bohrung (4), in der ein Stift (5) eingesetzt ist, aufweisen, wobei die Bohrung (4) bei der Montage des Eckwinkels gefertigt worden ist.

Fig. 1

EP 0 466 158 A1

Die Erfindung bezieht sich auf Eckwinkel zum Einsetzen in Profile für Rahmen von Fenstern, Türen, Fassadenteilen und dergleichen, der zwei gegeneinander einstellbare und fixierbare Schenkel beinhaltet, die jeweils in die Profile eingreifen und an diesen fixiert sind, wobei die miteinander kooperierenden Teile der Schenkel zylindrisch sind und gegenseitig ineinandergreifende Verzahnungen aufweisen und die Verzahnung eines Schenkels gegenüber der des anderen Schenkels um den halben Betrag der Zahnkreisteilung versetzt ausgeführt ist. Bei heute üblichen Industrie- und Wohnbauten werden nicht nur rechtwinkelige Fenster und Fassadenelemente verwendet, sondern auch solche, bei denen Rahmenteile in beliebigem Winkel aufeinander stehen. Diese Rahmenkonstruktionen werden häufig erst vor Ort aus einzelnen Profilen zusammengebaut und es ist daher notwendig, die Eckwinkel erst bei diesem Zusammenbau einzusetzen.

Da Bauwerke im Vergleich zu üblichen technischen Objekten große Toleranzen in ihren Ausmaßen aufweisen, können die Eckwinkel nicht präzise vorher in ihrem Betrag vorausbestimmt werden, sondern müssen erst die Winkel auf der Baustelle nach den jeweiligen Anforderungen hergestellt werden.

Daher ist es wünschenswert, einstellbare Eckwinkel zu verwenden, die leicht auf vom Nennmaß abweichende Winkelgroßen einstellbar sind.

Es ist auch eine Eckwinkelkonstruktion bekannt geworden, deren Schenkel auf ineinandergreifenden Zylindern oder Kegelflächen eine Verzahnung aufweisen, welche beim Zusammenfügen eine Winkeleinstellung erlaubt. Da diese Zähne formschlüssig einrastend ineinandergreifen, ist natürlich nur eine stufenweise Einstellung entsprechend der Zahlteilung möglich.

Es ist aber weiters wünschenswert, daß ein solcher Eckwinkel stufenlos einstellbar ist und daß er eine möglichst einfache Fixierung in der gewünschten Winkelstellung ermöglicht.

Dies erfolgt erfindungsgemäß in der Weise, daß an den normal zum jeweiligen Wälzkreis einer Verzahnung stehenden Seitenflächen eines Schenkels in deren Schnittpunkt mit der jeweiligen Wälzkreisachse der Verzahnung eine Lasche an den zueinander benachbarten Seitenflächen der beiden Schenkel befestigt ist und die Lasche und der Schenkel wenigstens eine gemeinsame Bohrung, in der ein Stift eingesetzt ist, aufweisen.

Durch diese Maßnahmen ist eine sehr steife feste Winkelverbindung herstellbar, die stufenlos einstellbar und fixierbar ist. Die Teile sind leicht herstellbar und können beispielsweise durch Ablängen aus einem Strangpreßprofil erzeugt werden.

Zur Montage ist lediglich eine Bohrmaschine nötig, mit der das gewünschte Loch durch die Lasche und den Schenkel gefertigt wird.

Dadurch ist es möglich, einen möglichst großen Winkelbereich mit dem Eckwinkel abzudecken, da die beiden Schenkel aneinander verzahnend abrollen und die Lasche lediglich die Rollbewegung führt. Es ist nicht wie bei üblichen Konstruktionen eine Beschränkung durch einen Scharnierbolzen oder ähnlichem gegeben.

Die Bauweise ist einfach herzustellen, da nur ein Bolzen je Schenkel nötig ist. Die durchgehende Bohrung durch den Schenkel benötigt nur eine einzige Messung und Aufspannung. Die Laschen brauchen jeweils nur an den Bolzenenden befestigt zu werden. Durch die Verwendung von zwei Laschen sind die Kräfte zwischen den Laschen etwa gleich verteilt und die Lasche wird nur auf Zug beansprucht. Somit ist ein Verkanten des Eckwinkels bei der Montage ausgeschlossen.

Es ist weiters günstig, daß durch jede Lasche wenigstens eine mit dem Schenkel gemeinsame Bohrung vorgesehen ist, in der ein Stift eingesetzt ist und die Bohrungen bei Montage des Eckwinkels erfolgen.

Dadurch, daß die Verzahnung eines Schenkels gegenüber der des anderen Schenkels um den halben Betrag der Zahnkreisteilung versetzt ausgeführt ist, ist ein besonders günstiger geometrischer Ablauf der beiden Schenkel gegeben und der Schnittwinkel zwischen den beiden Längsachsen der Schenkel befindet sich immer im gleichen Punkt, wie der Schnittpunkt der an dem Schenkel angeordneten Profile.

Diese Art der Verzahnung hat sich als besonders leicht herstellbar erwiesen, da sie keine Nacharbeitung benötigt. Weiters ist sie gegen kleine Beschädigungen unanfällig.

Die Erfindung wird anhand der nachstehenden Zeichnungen beschrieben.

Fig. 1    zeigt einen Schnitt durch einen montierten Eckwinkel normal zu den Wälzkreisachsen.

Fig. 2    zeigt eine Ansicht des Winkels in gestreckter Stellung.

Die Schenkel 1, 2 sind durch die Laschen 3, 3' verbunden. Die Laschen und einer der Schenkel weisen die Bohrung 4, 4' auf, durch die ein Stift 5 zur Fixierung in der gewünschten Stellung eingeschoben ist. Die Laschen 3 bzw. 3' sind durch die Bolzen 6 bzw. 6' an den Schenkel 1, 2 befestigt. Die Bohrungen der Bolzen 6, 6' befinden sich zentrisch zu den Wälzkreisachsen 8, 8'. Die Verzahnung 9 bzw. 10 der Schenkel 1, 2 befinden sich an den jeweils miteinander kooperierenden Teilen der Schenkel 1, 2 und sind jeweils zueinander um den halben Betrag der Zahnkreisteilung gegenüber der des anderen Schenkels versetzt ausgeführt.

In dem dargestellten Ausführungsbeispiel sind die Schenkel 1, 2 durch Ablängen aus Strangpreßprofilen hergestellt, wobei die Schenkel zur Material- und Gewichtsersparnis eine durchgehende Hohlkammer 11, 11' aufweist. Die der Verzahnung 9, 10 gegenüberliegenden Enden 12, 13 stekken in den Profilen 7, 7', der zu verbindenden Rahmenkonstruktion.

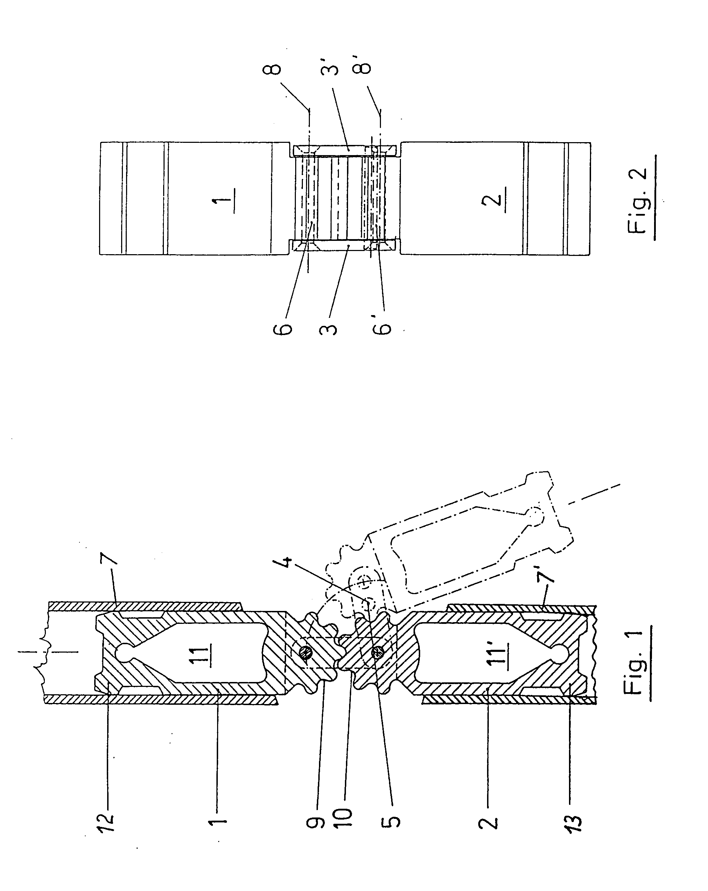

Der in Fig. 1 strichpunktierte Schenkel 1 zeigt ihn in der dargestellten Konstruktion in der maximal möglichen Schwenkstellung des Eckwinkels.

**Patentansprüche**

1. Eckwinkel zum Einsetzen in Profile für Rahmen von Fenstern, Türen, Fassadenteilen und dergleichen, der zwei gegeneinander einstellbare und fixierbare Schenkel beinhaltet, die jeweils in die Profile eingreifen und an diesen fixiert sind, wobei die miteinander kooperierenden Teile der Schenkel zylindrisch sind und gegenseitig ineinandergreifende Verzahnungen aufweisen und die Verzahnung eines Schenkels gegenüber der des anderen Schenkels um den halben Betrag der Zahnkreisteilung versetzt ausgeführt ist, dadurch gekennzeichnet, daß an normal zur Achse des jeweiligen Wälzkreises einer Verzahnung (9, 10) Stehenden Seitenflächen eines Schenkels (1, 2) in deren Schnittpunkt mit der jeweiligen Wälzkreisachse (8, 8') der Verzahnung eine Lasche (3, 3') an den nebeneinanderliegenden Seitenflächen der beiden Schenkel (1, 2) befestigt ist und die Lasche (3, 3') und der Schenkel (1, 2) wenigstens eine gemeinsame Bohrung, in der ein Stift (5) eingesetzt ist, aufweisen.

2. Eckwinkel nach Anspruch 1, dadurch gekennzeichnet, daß jeweils in der Wälzkreisachse (8, 8') eines Schenkels (1, 2) eine von einer zur anderen Seitenfläche durchgehende Bohrung (4) vorgesehen ist, in der ein Bolzen (6, 6') liegt, an deren Ende die Laschen (3, 3') befestigt sind.

3. Eckwinkel nach einem der vorhergehenden Ansprüche, dadurch gekennzeichnet, daß die ausgeführte Verzahnung (9, 10) eine Triebstockverzahnung ist.

Fig. 2

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 072 028 (COOPER) <br> * Seite 1, linke Spalte, Zeile 32 - rechte Spalte, Zeile 16; Abbildungen * * | 1,2 | E 06 B 3/96 <br> F 16 C 11/10 |
| | – – – | | |
| Y | FR-A-2 556 402 (WIELAND-WERKE) <br> * Seite 2, Zeile 25 - Seite 4, Zeile 4; Abbildungen * * | 1,2 | |
| | – – – | | |
| A | DE-A-3 842 024 (BAARS) <br> * Spalte 4, Zeile 58 - Zeile 68; Abbildungen 21-23 * * | 1 | |
| | – – – | | |
| A | DE-A-2 911 728 (BAUS) <br> * Seite 7, Absatz 3 -Absatz 6; Abbildungen * * | 1 | |
| | – – – | | |
| A | AU-D-5 831 865 (SYMONS) <br> * Seite 3, Absatz 6 - Seite 4, Absatz 2; Abbildung 1 * * | 1,2 | |
| | – – – – – | | |

**RECHERCHIERTE SACHGEBIETE (Int. Cl.5)**

E 06 B
E 05 D
F 16 C

Der vorliegende Recherchenbericht wurde für alle Patentansprüche erstellt

| Recherchenort | Abschlußdatum der Recherche | Prüfer |
|---|---|---|
| Den Haag | 18 Oktober 91 | DEPOORTER F. |